# EUROPEAN PATENT SPECIFICATION

(11) **EP 3 417 755 B1**
(45) Date of publication and mention of the grant of the patent: **11.08.2021**
(21) Application number: 16890672.5
(22) Date of filing: 14.12.2016
(51) Int. Cl.: A47L 9/28, A47L 9/02, A47L 9/04, G05D 1/02, A47L 9/00, A47L 9/30

(54) **AUTONOMOUS TRAVELING DEVICE**
AUTONOMES FAHRZEUG
DISPOSITIF À DÉPLACEMENT AUTONOME

(30) Priority: 16.02.2016 JP 2016027303
(43) Date of publication of application: 26.12.2018
(73) Proprietor: Toshiba Lifestyle Products & Services Corporation, Kawasaki-shi, Kanagawa 210-8543 (JP)
(72) Inventor: WATANABE, Kota, Kawasaki-shi Kanagawa 210-8543 (JP); IZAWA, Hirokazu, Kawasaki-shi Kanagawa 210-8543 (JP); FURUTA, Kazuhiro, Kawasaki-shi Kanagawa 210-8543 (JP); MARUTANI, Yuuki, Kawasaki-shi Kanagawa 210-8543 (JP)
(74) Representative: Haseltine Lake Kempner LLP
(86) International application number: PCT/JP2016/087309
(87) International publication number: WO 2017/141535

(56) References cited:
- WO-A1-2007/051972
- JP-A- 2005 352 707
- JP-A- 2010 057 647
- JP-A- 2014 194 729
- JP-A- 2014 236 837
- JP-A- 2015 070 922
- JP-A- 2015 536 489
- US-A1- 2004 204 792
- US-A1- 2005 171 644
- US-A1- 2008 184 518
- US-A1- 2014 207 280
- US-A1- 2014 288 709
- US-A1- 2015 212 520
- US-A1- 2015 362 921

## Description

### TECHNICAL FIELD

Embodiments described herein relate generally to an autonomous traveler which autonomously travels based on a map generated by map generation means.

### BACKGROUND ART

Conventionally, a so-called autonomous-traveling type vacuum cleaner (cleaning robot) which cleans a floor surface as a cleaning-object surface while autonomously traveling on the floor surface has been known.

In a technology to perform efficient cleaning by such a vacuum cleaner, a map which reflects the size and shape of a room to be cleaned, obstacles and the like is generated (through mapping), an optimum traveling route is set based on the generated map, and then traveling is performed along the traveling route. However, in generation of a map, the interior or the material such as of furniture or a floor surface inside a room, or the shape of an obstacle, for example, a toy or cord are not taken into consideration. Accordingly, in some case, such a vacuum cleaner may not travel along the expected traveling route due to the repetition of the operation for avoiding an obstacle or the like, or may get stuck due to floating or the like by obstacle collision or a step gap on a floor.

In addition, the layout inside a room may not always be the same, and arrangement of obstacles or the like may be changed compared to that at the time of creation of a map. Accordingly, if a traveling route is set only based on a stored map, there is a risk that traveling may be disturbed by an obstacle not indicated in the map or the like.

### CITATION LIST

### Patent Literature

PTL 1: Japanese Laid-open Patent Publication No.2012-96028

Document US 2005 171644 discloses an autonomous traveler according to the preamble of claim 1.

### SUMMARY OF INVENTION

### Technical Problem

The technical problem of the present invention is to provide an autonomous traveler capable of achieving efficient autonomous traveling.

### Solution to Problem

This is achieved by an autonomous traveler as defined in claim 1.

The autonomous traveler in the embodiment includes a main casing, a driving part, map generation means, self-position estimation means, information acquisition means and control means. The driving part enables the main casing to travel. The map generation means generates a map indicative of information on an area. The self-position estimation means estimates a self-position. The information acquisition means acquires external information on the main casing. The control means controls an operation of the driving part based on the map generated by the map generation means to make the main casing autonomously travel. Then, when information on the area at autonomous traveling is different from the information on the area indicated in the map generated by the map generation means, the control means makes a search motion performed.

### BRIEF DESCRIPTION OF DRAWINGS

[Fig. 1]

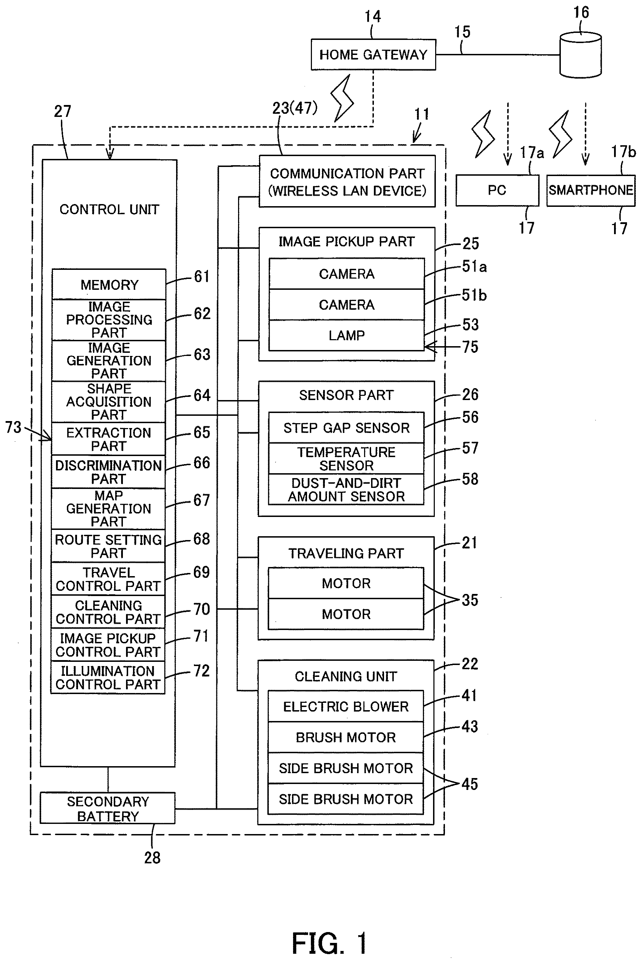

   Fig. 1 is a block diagram showing an internal configuration of an autonomous traveler according to an embodiment;
[Fig. 2]

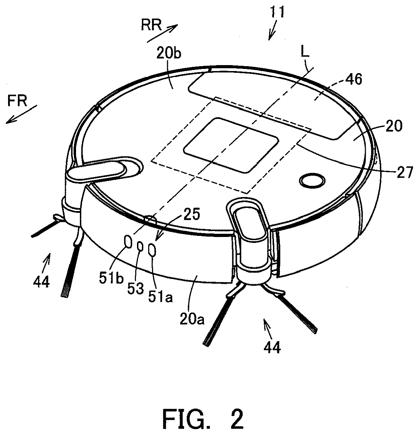

   Fig. 2 is a perspective view showing the above autonomous traveler;
[Fig. 3]

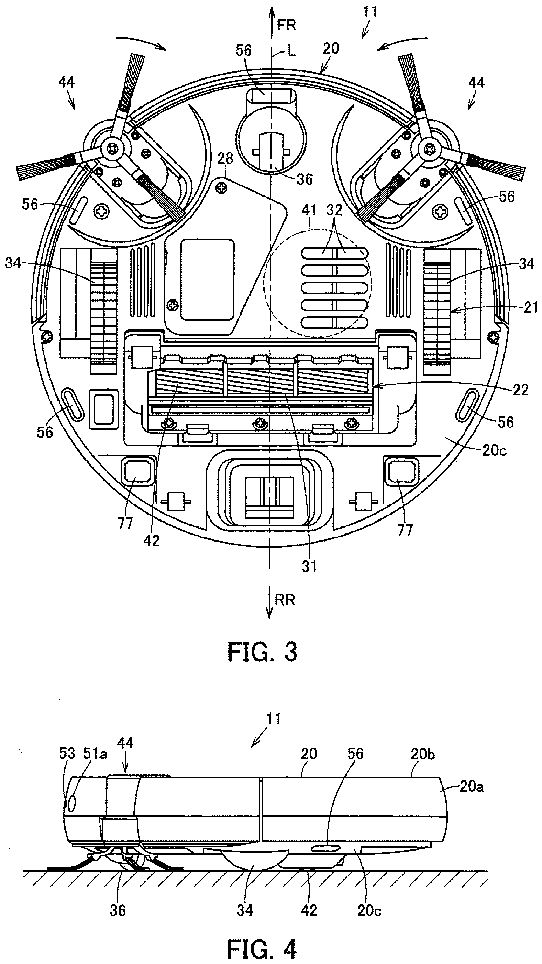

   Fig. 3 is a plan view showing the above autonomous traveler as viewed from below;
[Fig. 4]
   Fig. 4 is a side view showing the above autonomous traveler;
[Fig. 5]

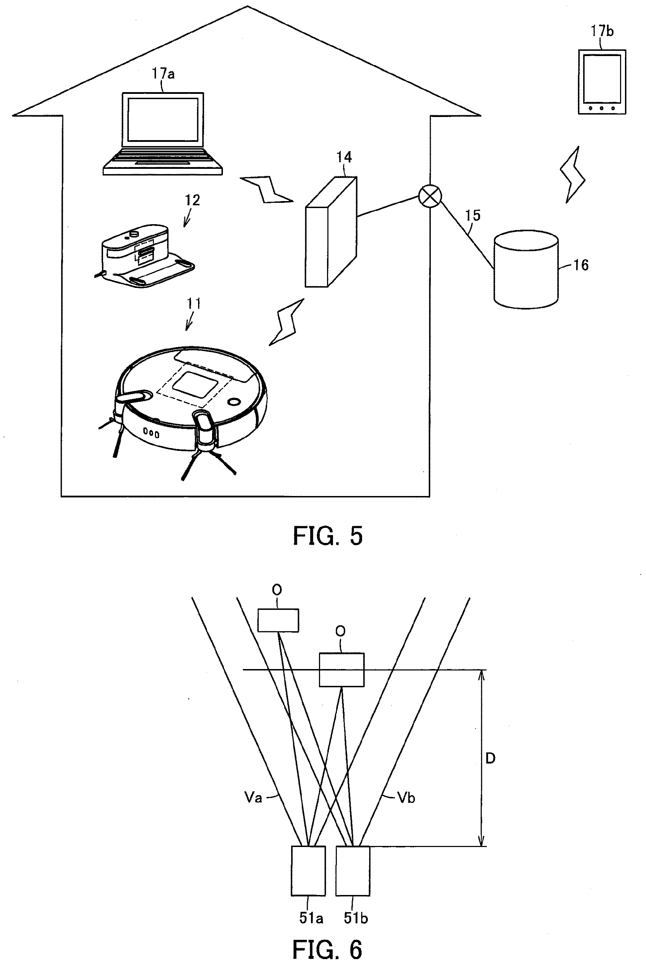

   Fig. 5 is an explanatory view schematically showing an autonomous traveling system including the above autonomous traveler;
[Fig. 6]
   Fig. 6 is an explanatory view schematically showing a method for calculating a distance to an object by the above autonomous traveler;
[Fig. 7]

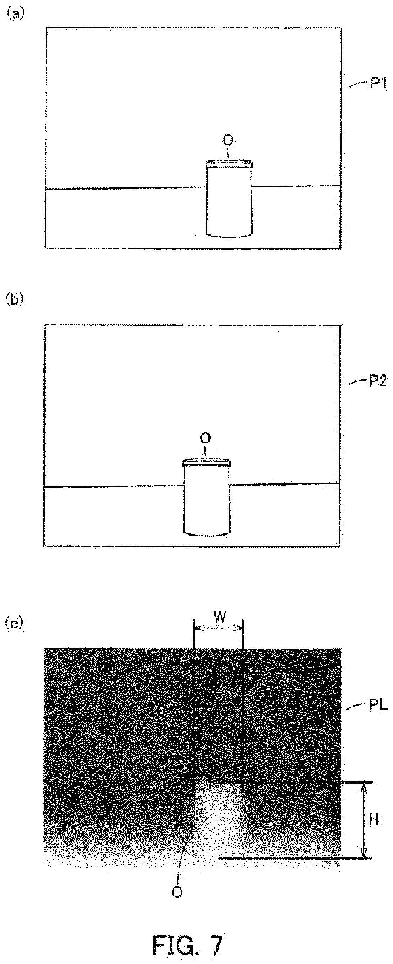

   Fig. 7 (a) is an explanatory view showing an example of an image picked up by one image pickup means, (b) is an explanatory view showing an example of an image picked up by the other image pickup means, and (c) is an explanatory view showing an example of a distance image generated based on (a) and (b) ;
[Fig. 8]

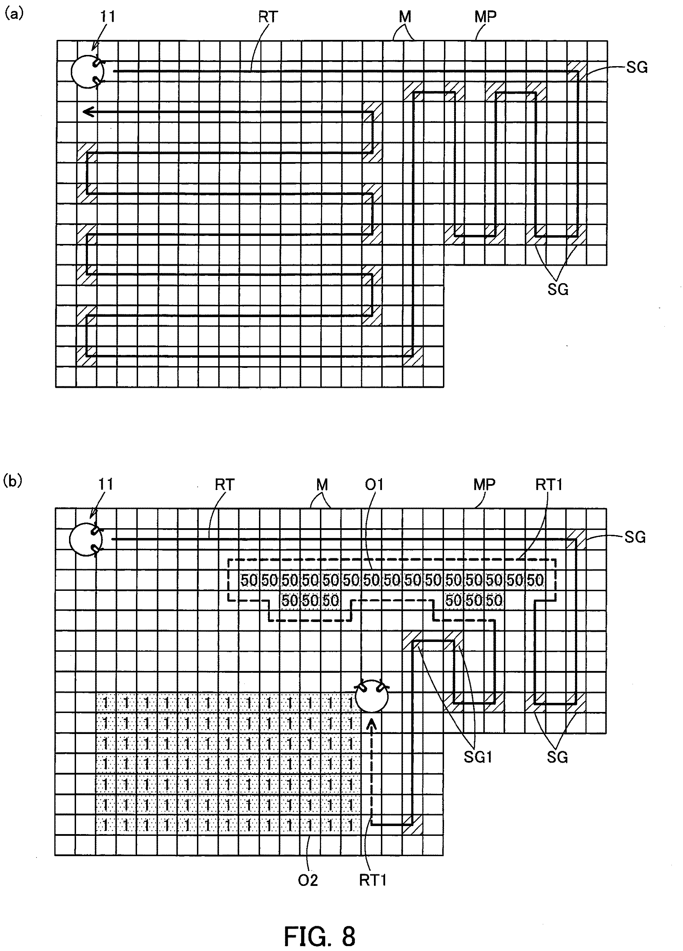

   Fig. 8(a) is an explanatory view showing an example visually showing a stored map, and (b) is an explanatory view showing an example of an operation of a vacuum cleaner in an actual cleaning area; and
[Fig. 9]

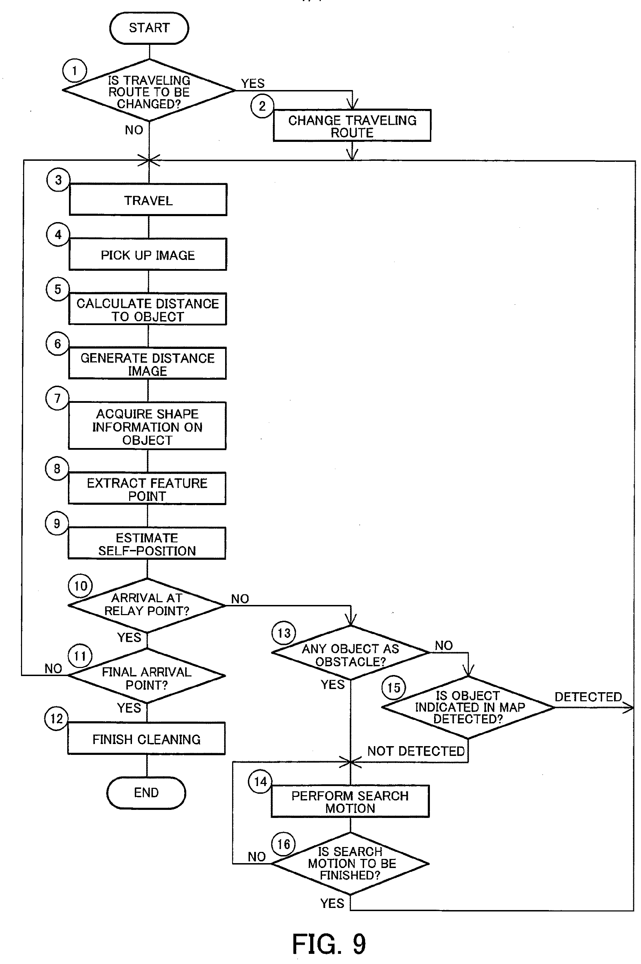

   Fig. 9 is a flowchart showing control of the above autonomous traveler.

### DESCRIPTION OF EMBODIMENTS

Hereinbelow, the configuration of an embodiment will be described with reference to the accompanying drawings.

In Fig. 1 to Fig. 5, reference sign 11 denotes a vacuum cleaner as an autonomous traveler, and this vacuum cleaner 11 constitutes a vacuum cleaning apparatus (vacuum cleaner system) as an autonomous traveler device in combination with a charging device (charging table) 12 (Fig. 5) as a station device serving as a base station for charging the vacuum cleaner 11. Then, the vacuum cleaner 11 is, in the embodiment, a so-called self-propelled robot cleaner (cleaning robot) which cleans a floor surface that is a cleaning-object surface as a traveling surface while autonomously traveling (self-propelled to travel) on the floor surface. For example as shown in Fig. 1, the vacuum cleaner 11 is enabled to perform wired or wireless communication with a general-purpose server 16 as data storage means (a data storage part) or a general-purpose external device 17 as indication means (a indication part) via an (external) network 15 such as the Internet, by performing communication (signal transmission and reception) with a home gateway (router) 14 as relay means (a relay part) disposed in a cleaning area or the like by using wired communication or wireless communication such as Wi-Fi (registered trademark) or Bluetooth (registered trademark).

Further, the vacuum cleaner 11 includes a hollow main casing 20 (Fig. 2). The vacuum cleaner 11 further includes a traveling part 21 to make the main casing 20 travel on a floor surface. Further, the vacuum cleaner 11 may include a cleaning unit 22 for cleaning dust and dirt on a floor surface or the like. Further, the vacuum cleaner 11 may include a communication part 23 for performing communication with an external device including the charging device 12. The vacuum cleaner 11 may also include an image pickup part 25 for picking up images. The vacuum cleaner 11 may also include a sensor part 26. Further, the vacuum cleaner 11 includes control means (a control unit) 27 which is a controller for controlling the traveling part 21, the cleaning unit 22, the communication part 23, the image pickup part 25 or the like. The vacuum cleaner 11 may also include a secondary battery 28 for supplying electric power to the traveling part 21, the cleaning unit 22, the communication part 23, the image pickup part 25, the sensor part 26, the control means 27 or the like. In addition, the following description will be given on the assumption that a direction extending along the traveling direction of the vacuum cleaner 11 (main casing 20) is assumed as a back-and-forth direction (directions of arrows FR and RR shown in Fig. 2) while a left-and-right direction (directions toward both sides) intersecting (orthogonally crossing) the back-and-forth direction is assumed as a widthwise direction.

The main casing 20 shown in Fig. 2 to Fig. 4 is formed into a flat columnar shape (disc shape) or the like from a synthetic resin, for example. That is, the main casing 20 includes a side surface portion 20a (Fig. 2), and an upper surface portion 20b (Fig. 2) and a lower surface portion 20c (Fig. 3) continuing from an upper portion and a lower portion of the side surface portion 20a, respectively. The side surface portion 20a of the main casing 20 is formed into a generally cylindrical-surface shape, and the image pickup part 25 or the like, for example, is disposed on the side surface portion 20a. Also, the upper surface portion 20b and the lower surface portion 20c of the main casing 20 are each formed into a generally circular shape, where a suction port 31 serving as a dust-collecting port, an exhaust port 32 or the like are opened in the lower surface portion 20c facing the floor surface, as shown in Fig. 3.

The traveling part 21 includes driving wheels 34, 34 as a plurality (pair) of driving parts, and motors 35, 35 (Fig. 1) being driving means as operating parts for driving the driving wheels 34, 34. The traveling part 21 may include a swing wheel 36 for swinging use.

Each driving wheel 34 makes the vacuum cleaner 11 (main casing 20) travel (autonomously travel) in an advancing direction and a retreating direction on the floor surface, that is, serves for traveling use, and the driving wheels 34, having an unshown rotational axis extending along a left-and-right widthwise direction, are disposed symmetrical to each other in the widthwise direction. As a driving part, a crawler or the like can be used instead of these driving wheels 34.

Each motor 35 (Fig. 1) is disposed, for example, in correspondence with each driving wheel 34, and is enabled to drive each driving wheel 34 independently.

The swing wheel 36, which is positioned at a generally central and front portion in the widthwise direction of the lower surface portion 20c of the main casing 20, is a driven wheel swingable along the floor surface.

The cleaning unit 22 includes, for example, an electric blower 41 which is positioned inside the main casing 20 to suck dust and dirt along with air through the suction port 31 and discharge exhaust air through the exhaust port 32, a rotary brush 42 as a rotary cleaner which is rotatably attached to the suction port 31 to scrape up dust and dirt, as well as a brush motor 43 (Fig. 1) for rotationally driving the rotary brush 42, a side brush 44 which is auxiliary cleaning means (auxiliary cleaning part) as a swinging-cleaning part rotatably attached on both sides of the main casing 20 on its front side or the like to scrape together dust and dirt, as well as a side brush motor 45 (Fig. 1) for driving the side brush 44, and a dust-collecting unit 46 (Fig. 2) which communicates with the suction port 31 to accumulate dust and dirt, or the like. In addition, with respect to the electric blower 41, the rotary brush 42 as well as the brush motor 43 (Fig. 1), and the side brush 44 as well as the side brush motor 45 (Fig. 1), it is sufficient that at least any one of these members is included.

The communication part 23 shown in Fig. 1 includes a wireless LAN device 47 which is reporting means serving as wireless communication means (a wireless communication part) for performing wireless communication with the external device 17 via the home gateway 14 and the network 15 and as cleaner signal receiving means (a cleaner signal receiving part). The communication part 23 may also include unshown transmission means (a transmission part), for example, an infrared emitting element for transmitting wireless signals (infrared signals) to the charging device 12 (Fig. 5) and the like. Further, the communication part 23 may include unshown receiving means (a receiving part) or the like, for example, such as a phototransistor for receiving wireless signals (infrared signals) from the charging device 12, an unshown remote control and the like. In addition, for example, the communication part 23 may have an access point function to be used to perform wireless communication directly with the external device 17 not via the home gateway 14. Further, for example, a web server function may also be added to the communication part 23.

The wireless LAN device 47 performs transmission and reception of various types of information with the network 15 from the vacuum cleaner 11 via the home gateway 14.

The image pickup part 25 includes a plurality of cameras 51a, 51b, for example as one and the other image pickup means (image-pickup-part main bodies) . The image pickup part 25 may include a lamp 53, such as an LED and the like, as illumination means (an illumination part) for giving illumination for these cameras 51a, 51b.

As shown in Fig. 2, the cameras 51a, 51b are disposed on both sides of a front portion in the side surface portion 20a of the main casing 20. That is, in the embodiment, the cameras 51a, 51b are disposed on the side surface portion 20a of the main casing 20 at positions which are skewed by a generally equal specified angle (acute angle) in the left-and-right direction with respect to a widthwise center line L of the vacuum cleaner 11 (main casing 20), respectively. In other words, these cameras 51a, 51b are disposed generally symmetrically in the widthwise direction with respect to the main casing 20, and the central position between these cameras 51a, 51b is generally coincident with the central position of the widthwise direction intersecting (orthogonally crossing) the back-and-forth direction, which is the traveling direction of the vacuum cleaner 11 (main casing 20) . Further, these cameras 51a, 51b are disposed at generally equal positions in an up-and-down direction, that is, generally equal height positions. Therefore, these cameras 51a, 51b are set generally equal to each other in height from a floor surface while the vacuum cleaner 11 is set on the floor surface. Accordingly, the cameras 51a, 51b are disposed at separated and mutually shifted positions (positions shifted in the left-and-right direction) . Also, the cameras 51a, 51b are digital cameras which pick up digital images of a forward direction, which is the traveling direction of the main casing 20, at specified horizontal angles of view (for example 105° or the like) and at specified time intervals, for example at a micro-time basis such as several tens of milliseconds or the like, or at a several-second basis or the like. Further, these cameras 51a, 51b have their image pickup ranges (fields of view) Va, Vb overlapping with each other (Fig. 6), so that (one and the other) images P1, P2 (Fig. 7(a) and Fig. 7(b)) picked up by these cameras 51a, 51b overlap with each other in the left-and-right direction at a region in which their image pickup regions contain a forward position resulting from extending the widthwise center line L of the vacuum cleaner 11 (main casing 20). In the embodiment, the cameras 51a, 51b are so designed to pick up color images of a visible light region, for example. In addition, images picked up by the cameras 51a, 51b may be compressed into a specified data format by, for example, an unshown image processing circuit or the like.

The lamp 53 serves to emit illuminating light for image pickup by the cameras 51a, 51b, and is disposed at an intermediate position between the cameras 51a, 51b, that is, at a position on the center line L in the side surface portion 20a of the main casing 20. That is, the lamp 53 is distanced generally equally from the cameras 51a, 51b. Further, the lamp 53 is disposed at a generally equal position in the up-and-down direction, that is, a generally equal height position, to the cameras 51a, 51b. Accordingly, the lamp 53 is disposed at a generally central portion in the widthwise direction between the cameras 51a, 51b. In the embodiment, the lamp 53 is designed to emit light containing the visible light region. The lamp 53 may be set for each of the cameras 51a, 51b.

The sensor part 26 shown in Fig. 1 may include a step gap sensor (step gap detection means (a step gap detection part)) 56. The sensor part 26 may also include a temperature sensor (temperature detection means (a temperature detection part)) 57. Further, the sensor part 26 may include a dust-and-dirt amount sensor (dust-and-dirt amount detection means (a dust-and-dirt amount detection part)) 58. In addition, the sensor part 26 may include, for example, a rotational speed sensor such as an optical encoder for detecting rotational speed of each driving wheel 34 (each motor 35) to detect a swing angle or progressional distance of the vacuum cleaner 11 (main casing 20 (Fig. 2)), a non-contact-type obstacle sensor for detecting an obstacle by use of ultrasonic waves, infrared rays or the like, a contact-type obstacle sensor for detecting an obstacle by contacting with the obstacle, or the like.

The step gap sensor 56 is a non-contact sensor, for example, an infrared sensor or an ultrasonic sensor. A distance sensor serves as the step gap sensor 56, which emits infrared rays or ultrasonic waves to an object to be detected, (in the embodiment, to a floor surface), and then receives the reflection waves from the object to be detected to detect a distance between the object to be detected and the step gap sensor 56 based on time difference between the transmission and the reception of the infrared rays or the ultrasonic waves . That is, the step gap sensor 56 detects a distance between the step gap sensor 56 (the position at which the step gap sensor 56 is disposed) and the floor surface to detect a step gap on the floor surface. As shown in Fig. 3, the step gap sensor 56 is disposed on the lower surface portion 20c of the main casing 20. In the embodiment, the step gap sensors 56 are disposed, for example, respectively in front and rear of the driving wheels 34, 34 and in front portion of the swing wheel 36 (the front lower surface portion of the main casing 20) .

For example, a non-contact sensor or the like serves as the temperature sensor 57 shown in Fig. 1, which detects a temperature of an object to be detected by detecting infrared rays emitted from the object to be detected. The temperature sensor 57 which is disposed, for example, on the side surface portion 20a, the upper surface portion 20b (Fig. 2) or the like of the main casing 20 is designed to detect a temperature of an object to be detected in the forward direction of the main casing 20 (Fig. 2). In addition, the temperature sensor 57 may be designed to detect a temperature, for example, based on infrared images picked up by the cameras 51a, 51b.

The dust-and-dirt amount sensor 58 includes, for example, a light emitting part and a light receiving part disposed inside the air path communicating from the suction port 31 (Fig. 3) to the dust-collecting unit 46 (Fig. 2). An optical sensor or the like serves as the dust-and-dirt amount sensor 58, which detects the amount of dust and dirt based on increase and decrease of the light amount received at the light receiving part with respect to the light emitted from the light emitting part depending on the amount of dust and dirt going through the air path.

The control means 27 shown in Fig. 1 is a microcomputer including, for example, a CPU which is a control means main body (control unit main body), a ROM which is a storage part in which fixed data such as programs to be read by the CPU are stored, a RAM which is an area storage part for dynamically forming various memory areas such as a work area serving as a working region for data processing by programs or the like (where these component members are not shown). The control means 27 may further include a memory 61 as storage means (a storage section). The control means 27 may also include an image processing part 62. Further, the control means 27 may include an image generation part 63 as distance image generation means (a distance image generation part). The control means 27 may also include a shape acquisition part 64 as shape acquisition means. Further, the control means 27 may include an extraction part 65 which is extraction means. The control means 27 may also include a discrimination part 66 as discrimination means. Further, the control means 27 may include a map generation part 67 which is map generation means for generating a map for traveling use. The control means 27 may also include a route setting part 68 for setting a traveling route based on a map. The control means 27 may also include a travel control part 69. Further, the control means 27 may include a cleaning control part 70. The control means 27 may also include an image pickup control part 71. Further, the control means 27 may include an illumination control part 72. Then, the control means 27 includes, for example, a traveling mode for driving the driving wheels 34, 34 (Fig. 3), that is, the motors 35, 35, to make the vacuum cleaner 11 (main casing 20 (Fig. 2)) autonomously travel. The control means 27 may also include a charging mode for charging the secondary battery 28 via the charging device 12 (Fig. 5). The control means 27 may further include a standby mode applied during a standby sate.

The memory 61 stores various types of data, for example, image data picked up by the cameras 51a, 51b, threshold values for use by the discrimination part 66 or the like, a map generated by the map generation part 67, and the like. A non-volatile memory, for example, a flash memory, serves as the memory 61, which holds various types of stored data regardless of whether the vacuum cleaner 11 is powered on or off.

The image processing part 62 performs image processing such as correction of lens distortion and/or contrast adjusting of images picked up by the cameras 51a, 51b. The image processing part 62 is not an essential element.

The image generation part 63 calculates a distance (depth) of an object (feature points) based on the distance between the cameras 51a, 51b and also images picked up by the cameras 51a, 51b, (in the embodiment, images picked up by the cameras 51a, 51b and then processed by the image processing part 62), and also generates a distance image (parallax image) indicative of a distance to the calculated object (feature points), using known methods. That is, the image generation part 63 applies triangulation based on a distance from the cameras 51a, 51b to an object (feature points) O and the distance between the cameras 51a, 51b (Fig. 6), detects pixel dots indicative of identical positions in individual images picked up by the cameras 51a, 51b (images processed by the image processing part 62), and calculates angles of the pixel dots in the up-and-down direction and the left-and-right direction to calculate a distance from the cameras 51a, 51b at that position based on those angles and the distance between the cameras 51a, 51b. Therefore, it is preferable that images picked up by the cameras 51a, 51b overlap with each other as much as possible. Further, the distance image is generated by the image generation part 63 through displaying of calculated pixel-dot-basis distances that are converted into visually discernible gradation levels such as brightness, color tone or the like on a specified dot basis such as a one-dot basis. In the embodiment, the image generation part 63 generates a distance image which is a black-and-white image whose brightness decreases more and more with increasing distance, that is, as a gray-scale image of 256 levels (=2⁸ with 8 bits) as an example which increases in blackness with increasing distance and increases in whiteness with decreasing distance in a forward direction from the vacuum cleaner 11 (main casing 20). Accordingly, the distance image is obtained by, as it were, visualizing a mass of distance information (distance data) of objects positioned within the image pickup ranges of the cameras 51a, 51b located forward in the traveling direction of the vacuum cleaner 11 (main casing 20). In addition, the image generation part 63 may generate a distance image only with regard to the pixel dots within a specified image range in each of images picked up by the cameras 51a, 51b, or may generate a distance image showing the entire images.

The shape acquisition part 64 acquires shape information on an object (obstacle) in images picked up by the cameras 51a, 51b. That is, the shape acquisition part 64 acquires shape information on an object O positioned at a specified distance D (or in a specified distance range) with respect to the distance image generated by the image generation part 63 (Fig. 6). The shape acquisition part 64 can, with respect to the object O, for example an empty can or the like picked up in a distance image PL, as one example in a distance image, detect a pixel-dot distance at the specified distance (or in the distance range), thereby enabling detection of a horizontal dimension, that is, a width dimension W, and an up-and-down dimension, that is, a height dimension H of the object O (Fig. 7 (c)) . The shape acquisition part 64 can also indirectly acquire shape information (a width dimension and a height dimension) or the like of space and/or a hole part having no existing object by acquiring shape information (a width dimension and a height dimension) of an object.

The extraction part 65 extracts feature points based on images picked up by the cameras 51a, 51b. That is, the extraction part 65 performs feature detection (feature extraction), for example, edge detection or the like, with respect to a distance image generated by the image generation part 63 to extract feature points of the distance image. The feature points are used as a reference point when the vacuum cleaner 11 estimates its self-position in a cleaning area. Moreover, any of known methods can be used as the edge detection method.

The discrimination part 66 discriminates information detected by the sensor part 26 (step gap sensor 56, temperature sensor 57, dust-and-dirt amount sensor 58), shape information on an object present at a specified distance (or in a specified distance range) or shape information on a narrow space or the like positioned between objects acquired by the shape acquisition part 64, feature points extracted by the extraction part 65, and a height, material, color tone and the like of an object present in images picked up by the cameras 51a, 51b (in the embodiment, in images processed by the image processing part 62). Based on such discrimination, the discrimination part 66 determines a self-position of the vacuum cleaner 11 and existence of an object as an obstacle and also determines necessity of change in the travel control and/or the cleaning control of the vacuum cleaner 11 (main casing 20 (Fig. 2)), information to be reflected to the map generation part 67, and the like. Accordingly, self-position estimation means (a self-position estimation part) 73 for estimating a self-position of the vacuum cleaner 11 is configured with the cameras 51a, 51b (the image processing part 62), the image generation part 63, the extraction part 65, the discrimination part 66 and the like, while obstacle detection means (an obstacle detection part) for detecting existence of an obstacle and information acquisition means (an information acquisition part) 75 for acquiring various types of information on a cleaning area are respectively configured with the sensor part 26 (the step gap sensor 56, the temperature sensor 57, the dust-and-dirt amount sensor 58), the cameras 51a, 51b (the image processing part 62), the image generation part 63, the shape acquisition part 64, the discrimination part 66 and the like.

That is, the self-position estimation means 73 collates feature points stored in a map and feature points extracted from a distance image by the extraction part 65 to estimate a self-position.

The obstacle detection means detects whether any obstacle exists or not in a specified image range of the distance image to detect existence of an object as an obstacle.

The information acquisition means 75 acquires step gap information on a floor surface detected by the step gap sensor 56, temperature information on an object detected by the temperature sensor 57, an amount of dust and dirt on a floor surface detected by the dust-and-dirt amount sensor 58, existence, an arrangement position and arrangement range of an object as an obstacle, a shape of an object such as a height dimension and a width dimension acquired by the shape acquisition part 64, material information on a floor surface, a color tone of a floor surface and the like.

The map generation part 67 calculates a positional relation between the cleaning area where the vacuum cleaner 11 (main casing 20 (Fig. 2)) is positioned and an object (obstacle) or the like positioned inside this cleaning area based on shape information on an object (obstacle) acquired by the shape acquisition part 64 and a position of the vacuum cleaner 11 (main casing 20 (Fig. 2)) estimated by the self-position estimation means 73, to generate a map. In the embodiment, a map generated by the map generation part 67 refers to the data (map data) expanded to the memory 61 or the like. In generation of the map by the map generation part 67, the self-position estimation means 73 may continue to estimate the self-position, or may estimate only, for example, the self-position at the travel start and then use a traveling direction and/or a traveling distance of the vacuum cleaner 11 (main casing 20 (Fig. 2)).

The route setting part 68 sets an optimum traveling route based on the map generated by the map generation part 67, a self-position estimated by the self-position estimation means 73, and detection frequency of an object as an obstacle detected by the obstacle detection means . Here, as an optimum traveling route to be generated, a route which can provide efficient traveling (cleaning) is set, such as the route which can provide the shortest traveling distance for traveling in an area possible to be cleaned in the map (an area excluding a part where traveling is impossible due to an obstacle, a step gap or the like), for example, the route where the vacuum cleaner 11 (main casing 20 (Fig. 2)) travels straight as long as possible (where directional change is least required), the route where contact with an object as an obstacle is less, or the route where the number of times of redundantly traveling the same location is the minimum, or the like. Further, on the traveling route, a plurality of relay points (sub goals) are set. In the embodiment, a traveling route set by the route setting part 68 refers to the data (traveling route data) expanded to the memory 61 or the like.

The travel control part 69 controls the operation of the motors 35, 35 (driving wheels 34, 34 (Fig. 3)) of the traveling part 21 based on the map generated by the map generation part 67 and the self-position estimated by the self-position estimation means 73. That is, the travel control part 69 controls a magnitude and a direction of current flowing through the motors 35, 35 to rotate the motors 35, 35 in a normal or reverse direction, thereby controlling the operation of the motors 35, 35. By controlling the operation of the motors 35, 35, the travel control part 69 controls the operation of the driving wheels 34, 34 (Fig. 3). In addition, the travel control part 69 is configured to control a traveling direction and/or traveling speed of the vacuum cleaner 11 (main casing 20) in accordance with discrimination by the discrimination part 66.

The cleaning control part 70 controls the operation of the electric blower 41, the brush motor 43 and the side brush motors 45 of the cleaning unit 22. That is, the cleaning control part 70 controls conduction angles of the electric blower 41, the brush motor 43 and the side brush motors 45, independently of one another, to control the operation of the electric blower 41, the brush motor 43 (rotary brush 42 (Fig. 3)) and the side brush motors 45 (side brushes 44 (Fig. 3)). Also, the cleaning control part 70 is configured to control the operation of the cleaning unit 22 in accordance with discrimination by the discrimination part 66. In addition, control units may be provided in correspondence with the electric blower 41, the brush motor 43 and the side brush motors 45, independently and respectively.

The image pickup control part 71 controls the operation of the cameras 51a, 51b of the image pickup part 25. That is, the image pickup control part 71 includes a control circuit for controlling the operation of shutters of the cameras 51a, 51b, and operates the shutters at specified time intervals, thus exerting control to pick up images by the cameras 51a, 51b at specified time intervals.

The illumination control part 72 controls the operation of the lamp 53 of the image pickup part 25. That is, the illumination control part 72 controls turn-on and -off of the lamp 53 via a switch or the like. The illumination control part 72 in the embodiment includes a sensor for detecting brightness around the vacuum cleaner 11, and makes the lamp 53 lit when the brightness detected by the sensor is a specified level or lower, and if otherwise, keeps the lamp 53 unlit.

Also, the image pickup control part 71 and the illumination control part 72 may be provided as image pickup control means separately from the control means 27.

In addition, the secondary battery 28 is electrically connected to charging terminals 77, 77 serving as connecting parts exposed on both sides of a rear portion in the lower surface portion 20c of the main casing 20 shown in Fig. 3, for example. With the charging terminals 77, 77 electrically and mechanically connected to the charging device 12 (Fig. 5) side, the secondary battery 28 is charged via the charging device 12 (Fig. 5).

The home gateway 14 shown in Fig. 1, which is also called an access point or the like, is installed inside a building and connected to the network 15, for example, by wire.

The server 16 is a computer (cloud server) connected to the network 15 and is capable of storing therein various types of data.

The external device 17 is a general-purpose device, for example a PC (tablet terminal (tablet PC)) 17a or a smartphone (mobile phone) 17b, which is enabled to make wired or wireless communication with the network 15 via the home gateway 14, for example, inside a building, and enabled to make wired or wireless communication with the network 15 outside the building. This external device 17 has at least an indication function of indication images.

Next, the operation of the above-described embodiment will be described with reference to drawings.

In general, the work of a vacuum cleaning apparatus is roughly divided into cleaning work for carrying out cleaning by the vacuum cleaner 11, and charging work for charging the secondary battery 28 with the charging device 12. The charging work is implemented by a known method using a charging circuit, such as a constant current circuit contained in the charging device 12. Accordingly, only the cleaning work will be described. Also, image pickup work for picking up an image of a specified object by at least one of the cameras 51a, 51b in response to an instruction from the external device 17 or the like may be included separately.

In the vacuum cleaner 11, at a timing such as of arrival at a preset cleaning start time or reception of a cleaning-start instruction signal transmitted by a remote control or the external device 17, for example, the control means 27 is switched over from the standby mode to the traveling mode, and the control means 27 (travel control part 69) drives the motors 35, 35 (driving wheels 34, 34) to make the vacuum cleaner 11 move from the charging device 12 by a specified distance.

Then, the vacuum cleaner 11 generates a map of the cleaning area by use of the map generation part 67. In generation of the map, in overview, the vacuum cleaner 11 acquires information by use of the information acquisition means 75 while traveling along an outer wall of the cleaning area or the like, and swirling at the position. Then, the vacuum cleaner 11 generates a map based on the present position of the vacuum cleaner 11 (map generation mode). When the control means 27 discriminates that the whole cleaning area is mapped, the control means 27 finishes the map generation mode and is switched over to a cleaning mode which will be described later. In addition, in the map generation mode, the cleaning unit 22 may be operated for cleaning during map generation.

Specifically, a generated map MP, for example as visually shown in Fig. 8(a), in which the cleaning area (a room) is divided into meshes M each having a specified-sized quadrilateral shape (square shape), is stored in such a manner that each of the meshes M is related to the information acquired by the information acquisition means 75 (Fig. 1). The stored information includes height, material, color tone, shape, temperature, feature points and the like of an object existing in the meshes M. The height and shape of an object is acquired by the shape acquisition part 64 based on the images picked up by the cameras 51a, 51b shown in Fig. 1. The material and color tone of an object is detected by the discrimination part 66 based on the images picked up by the cameras 51a, 51b. The temperature is detected by the temperature sensor 57. The feature points are extracted by the extraction part 65 based on the images picked up by the cameras 51a, 51b. The map MP at generation is stored in the memory 61, for example, and is read out from the memory 61 for the next and subsequent cleaning. However, in view of cases where even the same cleaning area may be changed in terms of layout of objects or the like, in the embodiment, the generated map MP is to be updated from time to time based on distance measurement of an object in the cleaning mode which will be described later. In addition, the map MP may be generated arbitrarily, for example, in response to user's instruction or the like, or may be input by a user in advance without setting of the map generation mode.

Next, the vacuum cleaner 11 generates an optimum traveling route based on the map by use of the route setting part 68, and performs cleaning while autonomously traveling in the cleaning area along the traveling route (cleaning mode) . In the cleaning mode, as for the cleaning unit 22, by use of the electric blower 41, the brush motor 43 (rotary brush 42 (Fig. 3) or the side brush motor 45 (side brush 44 (Fig. 3)) driven by the control means 27 (cleaning control part 70), dust and dirt on the floor surface are collected to the dust-collecting unit 46 (Fig. 2) through the suction port 31 (Fig. 3).

Then, in the autonomous traveling, in overview, the vacuum cleaner 11 periodically estimates the self-position by use of the self-position estimation means 73 while operating the cleaning unit 22 and traveling toward a relay point along the traveling route, and repeats the operation of going through a relay point. That is, the vacuum cleaner 11 travels so as to sequentially go through preset relay points while performing cleaning. For example, Fig. 8(a) visually shows the map MP and a traveling route RT which are stored. In the case of the map MP, the traveling route RT is set so that the vacuum cleaner 11 goes straight toward a relay point SG from a specified start position (for example, the upper left position in the figure), and makes a 90° turn to go straight toward the next relay point SG, and repeats such an operation to perform cleaning.

In this case, the vacuum cleaner 11, when detecting an object as an obstacle or a step gap before arriving at the next relay point, performs a search motion, taking that the actual cleaning area is different from the information in the map. For example, in the case where objects 01, 02 are detected as shown in Fig. 8(b) even when the map MP visually shown in Fig. 8(a) is stored, the vacuum cleaner 11 performs a search motion for searching these objects 01, 02. Specifically, the vacuum cleaner 11 sets a provisional traveling route RT1 (relay point SG1) so as to travel along the periphery of each of these objects 01, 02. That is, if the state of the cleaning area corresponds to the generated map MP, there is no obstacle on the traveling route RT between the relay points SG, SG (Fig. 8(a)) since the relay point SG is set on the traveling route RT generated based on the map MP. Accordingly, at the time of detecting the object as an obstacle, the state of the map MP is found to be different from that of the actual cleaning area. In the search motion of this case, the vacuum cleaner 11 is travel-controlled by the control means 27 to be enabled to travel while grasping difference by acquiring information by use of the information acquisition means 75 shown in Fig. 1, so that the map generation part 67 is enabled to reflect the acquired information in the map when needed.

More detailed description is provided with reference to the flowchart shown in Fig. 9. First, the control means 27 (route setting part 68) determines whether to change the traveling route (step 1). In this case, whether to change the traveling route is determined based on whether or not the map has been changed through the search motion at the previous traveling. That is, the control means 27 (route setting part 68) changes the traveling route in the case where the map has been changed (step 2), and the processing goes to step 3 described blow. In step 1, in the case where the map is not changed, the traveling route is unchanged and the processing goes to step 3 described below.

Then, the control means 27 (travel control part 69) drives the motors 35, 35 (driving wheels 34, 34 (Fig. 3)) to make the vacuum cleaner 11 (main casing 20 (Fig. 2)) travel along the traveling route (step 3). Through this operation, a traveling command determined based on the relation between the set traveling route and a self-position, for example, a traveling command for appropriately determining a distance in the case of traveling straight, a swing direction and an angle in the case of swing (directional change), or the like, is output from the discrimination part 66 to the travel control part 69. Based on the traveling command, the travel control part 69 operates the motors 35, 35 (driving wheels 34, 34 (Fig. 3)).

Then, the cameras 51a, 51b driven by the control means 27 (image pickup control part 71) pick up forward images in the traveling direction (step 4). At least any one of these picked-up images can be stored in the memory 61. Also, based on these images picked up by the cameras 51a, 51b and the distance between the cameras 51a, 51b, a distance to an object (feature points) in a specified image range is calculated by the image generation part 63 (step 5). Specifically, in the case where the images P1, P2 (for example, Fig. 7(a) and Fig. 7(b)) are picked up by the cameras 51a, 51b, for example, a distance of each of pixel dots in the images P1, P2 (in the embodiment, the images processed by the image processing part 62) is calculated by the image generation part 63. Further, the image generation part 63 generates a distance image based on the calculated distance (step 6). The distance image also can be stored, for example, in the memory 61. Fig. 7(c) shows one example of a distance image PL generated by the image generation part 63. Then, from the generated distance image, the shape acquisition part 64 shown in Fig. 1 acquires shape information on an object existing at a specified distance (or in a specified distance range) (step 7). In this case, shape information on a narrow space or the like also can be acquired through detection of a width dimension, a height dimension or the like as shape information on an object. Also from the generated distance image, the extraction part 65 extracts feature points (step 8). Then, the self-position estimation means 73 collates the feature points extracted by the extraction part 65 and feature points indicated in the map to estimate a self-position (step 9).

Next, the control means 27 (discrimination part 66) determines, based on the estimated self-position, whether or not the vacuum cleaner 11 arrives at a relay point (step 10) . In step 10, upon determination of arriving at a relay point, the control means 27 (discrimination part 66) determines whether or not the present position of the vacuum cleaner 11 is the final arrival point (step 11). In step 11, upon determining that the present position of the vacuum cleaner 11 is not the final arrival point, the processing goes back to step 3. Upon determining that the present position of the vacuum cleaner 11 is the final arrival point, the cleaning is finished (step 12). After the finish of the cleaning, the control means 27 (travel control part 69) controls the operation of the motors 35, 35 (driving wheels 34, 34) so that the vacuum cleaner 11 goes back to the charging device 12 to connect the charging terminals 77, 77 (Fig. 3) and terminals-for-charging of the charging device 12 (Fig. 5), and the control means 27 is switched over to the standby mode or the charging mode.

On the other hand, in step 10, upon determining that the vacuum cleaner 11 does not arrive at a relay point, the control means 27 (discrimination part 66) determines, based on the shape information on an object acquired by the shape acquisition part 64, whether or not any object as an obstacle exists ahead of the vacuum cleaner 11 (main casing 20 (Fig. 2)) at a specified distance (or in a specified distance range) (step 13). Specifically, the discrimination part 66 discriminates, based on the width dimension and height dimension of the object and the horizontal or up-and-down distance between the objects acquired by the shape acquisition part 64, whether or not at least a part of the object is positioned in a specified image range of the distance image. The image range corresponds to the external shape (up-and-down and left-and-right magnitudes) of the vacuum cleaner 11 (main casing 20) in the case where the vacuum cleaner 11 (main casing 20 (Fig. 2)) is positioned at a specified distance D from the cameras 51a, 51b (Fig. 6), or at a specified position in a specified distance range. Accordingly, having an object at a specified distance D in the image range (Fig. 6) or in a specified distance range means that an obstacle which is not indicated in the map exists on a traveling route connecting relay points each other.

Then, in step 13, upon determining that an object exists, the control means 27 makes the vacuum cleaner 11 perform a search motion (step 14). The search motion will be detailed later. In addition, in the search motion, although the cleaning unit 22 may be driven or stopped, the cleaning unit 22 is driven in the embodiment. Further, in step 13, upon determining that no object exists, the control means 27 determines whether or not an object as an obstacle indicated in the map disappears (whether an object as an obstacle indicated in the map is not detected) (step 15). In step 15, upon determination of an object not disappearing, the processing goes back to step 3, while upon determination of an object disappearing, the processing goes to step 14 for making the vacuum cleaner 11 perform the search motion.

Further, after step 14, the control means 27 (discrimination part 66) determines whether to finish the search motion (step 16). Determination of whether to finish the search motion is made based on whether or not the vacuum cleaner 11 has traveled around an object. Upon determination that the search motion is not to be finished (the search motion to be continued), the processing goes back to step 14, while upon determination that the search motion is to be finished, the processing goes back to step 3.

Next, the above-described search motion will be detailed.

In the search motion, the control means 27 (travel control part 69) shown in Fig. 1 controls the operation of the motors 35, 35 (driving wheels 34, 34 (Fig. 3)) so that the vacuum cleaner 11 (main casing 20 (Fig. 2)) travels along the periphery of the different position, such as an object as an obstacle, which is different from the map, (travels while keeping a constant distance to an object), and also acquires information by use of the information acquisition means 75.

Then, the information acquisition means 75 can acquire, as information on the cleaning area, for example, the shape of an object as an obstacle such as a width dimension, a height dimension or the like, as well as arrangement position and arrangement range of the object as an obstacle. Further, the information acquisition means 75 may acquire, as information on the cleaning area, at least one of material information on the floor surface, step gap information on the floor surface, temperature information on an object, an amount of dust and dirt on the floor surface and the like. These types of acquired information are reflected in the map by the map generation part 67. Based on the map in which these types of information are reflected, the control means 27 (route setting part 68) may change the traveling route for the next and subsequent traveling after the main casing 20 performs the search motion while traveling, or may change the cleaning control such as change in the operation of the cleaning unit 22 (electric blower 41, brush motor 43 (rotary brush 42 (Fig. 3)), the side brush motors 45, 45 (side brushes 44, 44(Fig. 3))) for the next and subsequent traveling (cleaning).

As for the arrangement position, the image generation part 63 calculates a distance to an arbitrary object by use of images picked up by the cameras 51a, 51b (images image-processed by the image processing part 62) to generate a distance image, and the discrimination part 66 can determine the arrangement position of an object as an obstacle based on the generated distance image. The arrangement range of an object as an obstacle can be acquired when the vacuum cleaner 11 travels around the object while detecting the object. In addition, the shape of an object as an obstacle such as a width dimension, a height dimension or the like is calculated by the shape acquisition part 64 based on the distance image. For example, Fig. 8(b) visually shows an example of the map MP in which a height dimension is reflected as the shape information on an object in addition to arrangement information and arrangement range of an object. In this case, an object 01 having a specified height (for example, 50 centimeters) or higher can be determined as a large obstacle such as a shelf by the discrimination part 66 (Fig. 1). That is, the range having a specified height or higher (meshes M indicating 50 in Fig. 8(b)) is the different position that is different from that in the stored map. Then, the control means 27 (travel control part 69) shown in Fig. 1 controls the operation of the motors 35, 35 (driving wheels 34, 34 (Fig. 3)) so that the vacuum cleaner 11 (main casing 20 (Fig. 2)) travels in the periphery of the object, thereby enabling careful cleaning of the dust and dirt accumulated in the periphery on the floor surface. Moreover, an object 02 having a wide and low shape such as approximately 1 centimeter height as shown in Fig. 8(b) can be determined as a rug or a carpet by the discrimination part 66 (Fig. 1). That is, the position of the meshes M indicating 1 in Fig. 8(b) is also different from that in the stored map. The arrangement position and the arrangement range of the object are reflected in the map, thereby allowing the control means 27 (route setting part 68) shown in Fig. 1 to set a traveling route for carefully cleaning the location on the floor surface where dust and dirt are easily accumulated, for example, a boundary with a wooden floor or the like, at the next and subsequent traveling (cleaning) after the search motion, and further, in the case of traveling on a rug or a carpet, allowing the control means 27 to reduce traveling speed compared to the traveling speed on a wooden floor, and allowing the control means 27 (cleaning control part 70) to power up the suction force of the electric blower 41 or to increase rotation speed of the brush motor 43 (rotary brush 42 (Fig. 3)). Moreover, for example, an object having a thin and small shape not shown in the figure is treated as a cable such as a power cord or the like. A traveling route for the next and subsequent traveling after the search motion can be set so that the vacuum cleaner 11 travels while keeping a constant distance from this object to prevent the side brush 44 (Fig. 3) or the like from getting stuck due to getting entangled in this object. In other words, when the vacuum cleaner 11 (main casing 20 (Fig. 2)) travels while avoiding an object as an obstacle, a distance (clearance) to the object is changed in accordance with the shape of an object at the next and subsequent traveling after the search motion, thereby allowing the vacuum cleaner 11 to travel (perform cleaning) while efficiently avoiding the object in accordance with the type of an object.

That is, the arrangement position of an object as an obstacle is acquired at the search motion, thereby allowing the control means 27 (route setting part 68) to set the traveling route for the next and subsequent traveling so as to reduce the number of times of directional change by the vacuum cleaner 11 (main casing 20), resulting in enabling more efficient traveling and cleaning in the cleaning area.

The shape of an object as an obstacle is acquired at the search motion, thereby also enabling setting of the traveling route so that the vacuum cleaner 11 can travel smoothly in the periphery of the object at the next and subsequent traveling after the search motion. The shape of an object can be easily and accurately acquired by use of the cameras 51a, 51b, the image generation part 63 and the shape acquisition part 64.

The material information of a floor surface can be determined by the discrimination part 66 based on images picked up by the cameras 51a, 51b, in the embodiment, based on the images processed by the image processing part 62. Specifically, material to be acquired includes, for example, hard and flat material such as a wooden floor, soft and long fluffy material such as a carpet or a rug, a tatami mat, or the like. The material information on a floor surface is reflected in the map, thereby enabling change in the traveling speed of the vacuum cleaner 11 (main casing 20 (Fig. 2)) in accordance with material of a floor surface, for example, by reducing traveling speed on a carpet or a rug at the next and subsequent traveling after the search motion compared to the traveling speed on a wooden floor, enabling powering up of the suction force of the electric blower 41, and/or enabling increase of rotation speed of the brush motor 43 (rotary brush 42 (Fig. 3)). The control means 27 (travel control part 69) controls the operation of the motors 35, 35 (driving wheels 34, 34 (Fig. 3)) to make the vacuum cleaner 11 (main casing 20 (Fig. 2)) travel relatively-slowly on a floor surface not being flat, for example, a carpet or a rug, thereby enabling the prevention of getting stuck. Moreover, the control means 27 (route setting part 68) sets a traveling route for the next time so that the vacuum cleaner 11 (main casing 20 (Fig. 2)) travels along a boundary between mutually different types of floor surfaces, such as a wooden floor and a carpet, thereby enabling cleaning of the location where dust and dirt are easily accumulated. Further, the location where the charging device 12 (Fig. 5) is disposed is assumed to be on a wooden floor in many cases. Then, in order to enable performing smooth returning to the charging device 12 (Fig. 5), the material information is indicated in the map, and the control means 27 (route setting part 68) sets a traveling route for the next and subsequent traveling after the search motion so as to preferentially travel on the floor surface of the same material as the floor surface at the start of the traveling (cleaning) when returning to a specified position, for example, to the charging device 12 (Fig. 5). That is, in the case of a wooden floor surface, lower resistance is generated when the vacuum cleaner 11 travels compared to the case of a carpet or a rug as a floor surface, thus enabling power saving and traveling at a higher speed. Accordingly, preferential traveling on a wooden floor enables smooth returning to the charging device 12 (Fig. 5). This can optimize the traveling route, traveling control, and cleaning control of the vacuum cleaner 11, thus enabling efficient and smooth traveling in the cleaning area to perform efficient cleaning. In addition, the color tone information on a floor surface determined by the discrimination part 66 based on images picked up by the cameras 51a, 51b, in the embodiment images processed by the image processing part 62, may be acquired and then reflected in the map. In this case also, difference (with regard to material) of floor surfaces can be detected based on the color tones of the floor surfaces. Accordingly, in the same manner as the case where material information on a floor surface is acquired, the traveling route, the travel control and the cleaning control for the next and subsequent time after the search motion by the vacuum cleaner 11 can be optimized, thus enabling efficient and smooth traveling in the cleaning area to perform efficient cleaning.

The step gap information on a floor surface can be detected by the sensor part 26 (step gap sensor 56). The step gap information on a floor surface is reflected in the map, thereby allowing the control means 27 (route setting part 68) to set a traveling route by which the vacuum cleaner 11 rides over the step gap from a generally vertical direction in which the driving wheels 34, 34 (Fig. 3) intersects (orthogonally crossing) the step gap (a wall surface of the step gap (a rising surface)), at the next and subsequent traveling after the search motion, for example, at the time of riding over a step gap. This enables the prevention of stuck which easily occurs at the time of obliquely traveling toward a step gap. In addition, when detecting a step gap having a specified height (for example, 20 mm) or higher at the next and subsequent traveling, the control means 27 (travel control part 69) can control the operation of the motors 35, 35 (driving wheels 34, 34) so that the vacuum cleaner 11 avoids the step gap, that is, can take a method for non-execution of riding-over-operation or the like. This enables suppressing stuck more surely. Further, in the case where the vacuum cleaner 11 cleans the periphery of a step gap, the control means 27 (route setting part 68) sets a traveling route for the next and subsequent traveling after the search motion so as to perform cleaning in the order from the higher position of the step gap to the lower position, that is, so as to perform cleaning from a higher position in the place where a step gap exists. This ensures, at the next traveling, the collection of dust and dirt which may drop from a higher position to a lower position, if any, and also can prevent the case where, if the height of a step gap is too high to go up even if going down from the height of the step gap is possible, the vacuum cleaner 11 cannot go back to the higher position thus resulting in insufficient cleaning time. This can optimize the traveling route, traveling control and cleaning control of the vacuum cleaner 11, thus enabling efficient and smooth traveling in the cleaning area.

The temperature information on an object can be detected by the sensor part 26 (temperature sensor 57). The temperature information is reflected in the map, thereby allowing the control means 27 (route setting part 68) to set a traveling route for the next and subsequent traveling after the search motion, so that, for example, the vacuum cleaner 11 does not approach within a specified distance to the detected object having a specified temperature (for example, 50°C) or above. In addition, although a heater or the like is periodically used in winter, for example, in the case where a high temperature is detected based on information not in the map, occurrence of an abnormal situation can be determined, and thus can be reported to a user such as by transmitting an e-mail directly to the external device 17 via the wireless LAN device 47 or indirectly via the network 15, or by generating a warning sound. This allows the vacuum cleaner 11 to travel more safely, and may also help, for example, crime prevention and disaster prevention in a room while a user goes out.

The amount of dust and dirt can be detected by the sensor part 26 (dust-and-dirt amount sensor 58). The amount of dust and dirt is reflected in the map, thereby allowing the control means 27 (route setting part 68) to set a traveling route for the next and subsequent traveling after the search motion so as to perform cleaning, for example, in the case where the state where the amount of dust and dirt equals to a specified amount or more remains for a specified period of time or longer, by traveling repeatedly and intensively inside a specified area including the floor surface having the large amount of dust and dirt. This enables cleaning in accordance with the degree of stain in the cleaning area, thus enabling efficient cleaning in the cleaning area.

As described above, in the case where the information on an area at the autonomous traveling is different from the information on the area indicated in the map, the control means 27 controls the operation of the motors 35, 35 (driving wheels 34, 34 (Fig. 3)) so that the search motion is performed. This enables reducing risks such as contact with an obstacle and stuck, and optimizing a traveling route for the next and subsequent traveling by constantly acquiring the latest information on the area, thereby enabling efficient autonomous traveling.

In addition, since the traveling route of the vacuum cleaner 11 (main casing 20 (Fig. 2)) set based on the stored map is changed at the next and subsequent traveling based on the map in which the information acquired through the search motion is reflected, the traveling route is optimized in accordance with the actual cleaning area, thus enabling efficient autonomous traveling.

Especially, in the case of the vacuum cleaner 11 which cleans an area, based on the latest information on the area, the traveling route can be optimized, and further the cleaning control can be optimized and improved in efficiency, thus enabling efficient automatic cleaning.

At the time of changing the traveling route, that is, at the time of changing the map, a user can be informed by, for example, an e-mail transmitted to the external device 17 by use of the wireless LAN device 47, an e-mail transmitted to the external device 17 carried by a user by use of a mail server, or transmitted directly to the external device 17, or indication shown in a indication part disposed on the vacuum cleaner 11, or the like. In this case, user's consciousness on cleanliness in own room can be improved.

Further, as the search motion, the control means 27 controls the operation of the motors 35, 35 (driving wheels 34, 34 (Fig. 3)) so that the vacuum cleaner 11 (main casing 20 (Fig. 2)) acquires, by use of the information acquisition means 75, the range of the different position that is different from the map generated by the map generation part 67. Accordingly, the control means 27 (route setting part 68) can more surely generate the traveling route for avoiding the different position at the next and subsequent traveling. Especially, at the time of cleaning by use of the cleaning unit 22, acquisition of the range of the different position allows the control such as of a cleaning procedure in the cleaning area, thus enabling more efficient automatic cleaning.

Specifically, as the search motion, the control means 27 controls the operation of the motors 35, 35 (driving wheels 34, 34 (Fig. 3)) so that the vacuum cleaner 11 (main casing 20 (Fig. 2)) travels along the periphery of the different position that is different from the map generated by the map generation part 67, thereby acquiring information by use of the information acquisition means 75. This enables more accurate detection of the range of the different position with less dead angle. In addition, the cleaning unit 22 is operated to perform the search motion, thereby enabling cleaning dust and dirt in the periphery of the different position.

Further, the cleaning unit 22 is operated for cleaning during the search motion, thus enabling the improvement of efficient cleaning work.

Further, for example, in the case where an object stored in the map generated by the map generation part 67 disappears in the actual cleaning area, the object to be picked up by the cameras 51a, 51b is not picked up. With this state, disappearance of the object can be detected indirectly, and can be reflected in the map in the same manner that an object not stored in the map is detected.

Moreover, in the above-described embodiment, the information acquisition means 75 may be configured, for example, only with the cameras 51a, 51b and the image generation part 63, and the shape acquisition part 64 and the sensor part 26 are not essential constituent components. The sensor part 26 may include at least one of the step gap sensor 56, the temperature sensor 57, and the dust-and-dirt amount sensor 58. Further, the information acquisition means 75 may be configured with an arbitrary sensor for acquiring the arrangement position and/or the shape of an object, or the like.

The dust-and-dirt amount detection means may be configured with the optical sensor, or may have a constitution, for example, such that fine visible dust and dirt on a floor surface are detected based on images picked up by the cameras 51a, 51b.

## Claims

1. An autonomous traveler (11) comprising:
a main casing (20);
a driving part (34) for enabling the main casing (20) to travel;
map generation means (67) for generating a map indicative of information on an area;
self-position estimation means (73) for estimating a self-position;
information acquisition means (75) for acquiring external information on the main casing (20); and,
control means (27) for controlling an operation of the driving part (34) based on the map generated by the map generation means (67) to make the main casing (20) autonomously travel, **characterized in that**,
the information acquisition means (75) acquires at least one of an arrangement position of an obstacle, a shape of an obstacle, a temperature of an obstacle, material of a cleaning-object surface, a step gap of a cleaning-object surface, an amount of dust and dirt on a cleaning-object surface and a color tone of a cleaning-object surface as the information on the area of an external part of the main casing (20), wherein
when the information on the area acquired by the information acquisition means (75) at autonomously traveling is different from the information on the area indicated in the map generated by the map generation means (67), the control means (27) controls the operation of the driving part (34) so that the main casing (20) travels along a periphery of the position where the information is different, while making a search motion performed in which the information acquisition means (75) acquires the information on the area,
when the main casing (20) has traveled around the position, the search motion is finished, the information acquired by the information acquisition means (75) is reflected to the map by use of the map generation means (67), and the main casing (20) is returned to autonomously traveling.

2. The autonomous traveler (11) according to Claim 1, wherein
the control means (27) controls the operation of the driving part (34) to change a traveling route of the main casing (20) based on the map in which the information is reflected.

3. The autonomous traveler (11) according to Claim 2, wherein
when the control means (27) changes the traveling route of the main casing (20), the autonomous traveler (11) reports the change to a user.

4. The autonomous traveler (11) according to any one of Claims 1 to 3, comprising
a cleaning unit (22) for cleaning a cleaning-object surface, wherein
the cleaning unit (22) operates to perform cleaning at least when the search motion is performed by the control means (27).

5. The autonomous traveler (11) according to any one of Claims 1 to 4, wherein
the information acquisition means (75) includes:
a plurality of image pickup means (51a), (51b) disposed apart from one another on the main casing (20);
distance image generation means (63) for generating, based on images picked up by the plurality of image pickup means (51a), (51b), a distance image of an object positioned in a traveling direction side of the main casing (20); and
shape acquisition means (64) for acquiring shape information on the picked-up object based on the distance image generated by the distance image generation means (63), to acquire the shape of the obstacle.

## Patentansprüche

1. Autonomes Fahrgerät (11), umfassend:
ein Hauptgehäuse (20);
ein Antriebsteil (34), um dem Hauptgehäuse (20) ein Fortbewegen zu ermöglichen;
eine Kartenerzeugungseinrichtung (67) zum Erzeugen einer Karte, die indikativ für Informationen über einen Bereich ist;
eine Eigenposition-Schätzeinrichtung (73) zum Schätzen einer Eigenposition; eine Informationserfassungseinrichtung (75) zum Erfassen von externen Informationen über das Hauptgehäuse (20); und
eine Steuereinrichtung (27) zum Steuern eines Betriebs des Antriebsteils (34) basierend auf der Karte, die von der Kartenerzeugungseinrichtung (67) erzeugt wird, um das Hauptgehäuse (20) autonom fortbewegen zu lassen, **dadurch gekennzeichnet, dass**
die Informationserfassungseinrichtung (75) mindestens eines von einer Anordnungsposition eines Hindernisses, einer Form eines Hindernisses, einer Temperatur eines Hindernisses, einem Material einer Reinigungsobjektoberfläche, einem Stufenspalt einer Reinigungsobjektoberfläche, einer Menge an Staub und Schmutz auf einer Reinigungsobjektoberfläche und einem Farbton einer Reinigungsobjektoberfläche als die Informationen über den Bereich eines äußeren Teils des Hauptgehäuses (20) erfasst, wobei
wenn sich die Informationen über den Bereich, die durch die Informationserfassungseinrichtung (75) beim autonomen Fortbewegen erfasst werden, von den Informationen über den Bereich unterscheiden, die in der Karte angegeben sind, die durch die Kartenerzeugungseinrichtung (67) erzeugt wird, die Steuereinrichtung (27) den Betrieb des Antriebsteils (34) steuert, sodass sich das Hauptgehäuse (20) entlang einer Peripherie der Position fortbewegt, an der die Informationen unterschiedlich sind, während eine Suchbewegung ausgeführt wird, bei der die Informationserfassungseinrichtung (75) die Informationen über den Bereich erfasst,
wenn sich das Hauptgehäuse (20) um die Position fortbewegt hat, die Suchbewegung beendet ist, die von der Informationserfassungseinrichtung (75) erfassten Informationen durch Verwenden der Kartenerzeugungseinrichtung (67) in die Karte reflektiert werden und das Hauptgehäuse (20) wieder zum autonomen Fortbewegen zurückkehrt.

2. Autonomes Fahrgerät (11) gemäß Anspruch 1, wobei die Steuereinrichtung (27) den Betrieb des Antriebsteils (34) steuert, um eine Fortbewegungsstrecke des Hauptgehäuses (20) basierend auf der Karte, in der die Informationen reflektiert sind, zu ändern.

3. Autonomes Fahrgerät (11) gemäß Anspruch 2, wobei wenn das Steuermittel (27) die Fortbewegungsstrecke des Hauptgehäuses (20) ändert, das autonome Fahrgerät (11) die Änderung an einen Benutzer meldet.

4. Autonomes Fahrgerät (11) gemäß einem der Ansprüche 1 bis 3, umfassend eine Reinigungseinheit (22) zum Reinigen einer Reinigungsobjektoberfläche, wobei
die Reinigungseinheit (22) betrieben wird, um ein Reinigen mindestens auszuführen, wenn die Suchbewegung durch die Steuereinrichtung (27) ausgeführt wird.

5. Autonomes Fahrgerät (11) gemäß einem der Ansprüche 1 bis 4, wobei die Informationserfassungseinrichtung (75) Folgendes beinhaltet:
eine Vielzahl von Bildaufnahmeeinrichtungen (51a), (51b), die voneinander getrennt an dem Hauptgehäuse (20) angeordnet sind;
eine Abstandsbild-Erzeugungseinrichtung (63) zum Erzeugen, basierend auf Bildern, die die von der Vielzahl von Bildaufnahmeeinrichtungen (51a), (51b) aufgenommen werden, eines Abstandsbilds eines Objekts, das in Richtung einer Fortbewegungsseite des Hauptgehäuses (20) positioniert ist; und
eine Formerfassungseinrichtung (64) zum Erfassen von Forminformationen über das aufgenommene Objekt basierend auf dem Abstandsbild, das von dem Abstandsbild-Erzeugungsmittel (63) erzeugt wird, um die Form des Hindernisses zu erfassen.

## Revendications

1. Un dispositif mobile autonome (11) comprenant :
un boîtier principal (20) ;
une partie d'entraînement (34) pour permettre au boîtier principal (20) de se déplacer;
un moyen de génération de carte (67) pour générer une carte indicative d'informations sur une zone ;
un moyen d'estimation de propre position (73) pour estimer une propre position ;
un moyen d'acquisition d'informations (75) pour acquérir des informations externes sur le boîtier principal (20) ; et,
un moyen de commande (27) pour commander un fonctionnement de la partie d'entraînement (34) sur la base de la carte générée par le moyen de génération de carte (67) pour faire déplacer le boîtier principal (20) de manière autonome,
**caractérisé en ce que**,
le moyen d'acquisition d'informations (75) acquiert au moins une parmi une position de disposition d'un obstacle, une forme d'un obstacle, une température d'un obstacle, un matériau d'une surface de l'objet à nettoyer, un intervalle d'étape d'une surface de l'objet à nettoyer, une quantité de poussière et de saleté sur une surface de l'objet à nettoyer et un ton de couleur d'une surface de l'objet à nettoyer en tant qu'informations sur la zone d'une partie externe du boîtier principal (20), dans lequel
lorsque les informations sur la zone acquises par le moyen d'acquisition d'informations (75) lors d'un déplacement autonome sont différentes des informations sur la zone indiquée sur la carte générée par le moyen de génération de carte (67), le moyen de commande (27) commande le fonctionnement de la partie d'entraînement (34) de sorte que le boîtier principal (20) se déplace le long d'une périphérie de la position où les informations sont différentes, tout en effectuant un mouvement de recherche dans lequel le moyen d'acquisition d'informations (75) acquiert les informations sur la zone,
lorsque le boîtier principal (20) s'est déplacé autour de la position, le mouvement de recherche est terminé, les informations acquises par le moyen d'acquisition d'informations (75) sont reflétées sur la carte en utilisant le moyen de génération de carte (67), et le boîtier principal (20) est remis au déplacement de manière autonome.

2. Le dispositif mobile autonome (11) selon la revendication 1, dans lequel le moyen de commande (27) commande le fonctionnement de la partie d'entraînement (34) pour changer un itinéraire de déplacement du boîtier principal (20) sur la base de la carte dans laquelle les informations sont reflétées.

3. Le dispositif mobile autonome (11) selon la revendication 2, dans lequel lorsque le moyen de commande (27) change l'itinéraire de déplacement du boîtier principal (20), le dispositif mobile autonome (11) signale le changement à un utilisateur.

4. Le dispositif mobile autonome (11) selon l'une quelconque des revendications 1 à 3, comprenant
une unité de nettoyage (22) pour nettoyer une surface de l'objet à nettoyer, dans lequel
l'unité de nettoyage (22) fonctionne pour effectuer le nettoyage au moins lorsque le mouvement de recherche est effectué par le moyen de commande (27).

5. Le dispositif mobile autonome (11) selon l'une quelconque des revendications 1 à 4, dans lequel
le moyen d'acquisition d'informations (75) comprend :
une pluralité de moyens de capture d'image (51a), (51b) disposés à l'écart les uns des autres sur le boîtier principal (20) ;
un moyen de génération d'image de distance (63) pour générer, sur la base d'images capturées par la pluralité de moyens de capture d'image (51a), (51b), une image de distance d'un objet positionné dans un côté de direction de déplacement du boîtier principal (20) ; et
un moyen d'acquisition de forme (64) pour acquérir des informations de forme sur l'objet capté sur la base de l'image de distance générée par le moyen de génération d'image de distance (63), pour acquérir la forme de l'obstacle.
